# EUROPEAN PATENT APPLICATION

(11) **EP 4 775 961 A1**
(43) Date of publication of application: **15.07.2026**
(21) Application number: 26150033.4
(22) Date of filing: 02.01.2026
(51) Int. Cl.: G01N 21/552, G02B 6/12

(54) **PHOTONIC RESONATOR CHIP SPECTROSCOPY GAS SENSING**

(30) Priority: 12.01.2025 US 202563744288 P; 12.12.2025 US 202519418408
(71) Applicant: Honeywell International Inc., Charlotte, NC 28202 (US)
(72) Inventor: FENG, Chen, Charlotte, 28202 (US); SHAFAI, Moin S, Charlotte, 28202 (US); VENKATARAYALU, Suresh, Charlotte, 28202 (US)
(74) Representative: Haseltine Lake Kempner LLP

(57) **Abstract**

The present disclosure provides a photonic resonator chip comprising a substrate, a thermal silicon oxide layer disposed on the substrate, and a silicon nitride waveguide disposed on the thermal silicon oxide layer. The silicon nitride waveguide comprises a curved bus waveguide and a ring resonator adjacent to the curved bus waveguide, wherein the curved bus waveguide and ring resonator are arranged off-centric relative to each other. The photonic resonator chip further comprises a polysilicon shield disposed above the silicon nitride waveguide. The curved bus waveguide defines a first end corresponding to an input portion and a second end corresponding to an output portion, wherein the first and second ends are arranged at ninety degree orientation relative to each other. The photonic resonator chip may be incorporated into chip resonator gas cells and photonic resonator chip spectroscopy gas sensing devices for gas analysis applications.

## Description

### CROSS-REFERENCE TO RELATED APPLICATIONS

This application claims priority to U.S. Provisional Patent Application No. 63/744,288, filed on January 12, 2025, which is incorporated herein by reference in its entirety.

### TECHNICAL FIELD

Embodiments of the present disclosure generally relate to gas spectroscopy, and, more particularly, to photonic resonator chip spectroscopy gas sensing.

### BACKGROUND

Applicant has identified many technical challenges associated with resonator gas cell spectroscopy sensing. Through applied effort, ingenuity, and innovation, many of these identified problems have been solved by developing solutions that are included in embodiments of the present disclosure, many examples of which are described in detail herein.

### SUMMARY

According to an aspect of the present disclosure, a photonic resonator chip is provided. The photonic resonator chip comprises a substrate. The photonic resonator chip comprises a thermal silicon oxide layer disposed on the substrate. The photonic resonator chip comprises a silicon nitride waveguide disposed on the thermal silicon oxide layer. The silicon nitride waveguide comprises a curved bus waveguide and a ring resonator adjacent to the curved bus waveguide. The curved bus waveguide and the ring resonator are arranged off-centric relative to each other. The photonic resonator chip comprises a polysilicon shield disposed above the silicon nitride waveguide.

According to other aspects of the present disclosure, the photonic resonator chip may include one or more of the following features. The photonic resonator chip may further comprise a PECVD layer disposed between the silicon nitride waveguide and the polysilicon shield. The curved bus waveguide may define a first end corresponding to an input portion of the curved bus waveguide and second end corresponding to an output portion of the curved bus waveguide. The first end and the second end may be arranged at a ninety degree orientation relative to each other. The first end may comprise an input optical coupler and the second end may comprise an output optical coupler. Each of the input optical coupler and the output optical coupler may comprise a grating optical coupler. The substrate may be a silicon substrate. The ring resonator may have an effective optical path length of approximately 150 mm.

According to another aspect of the present disclosure, a chip resonator gas cell is provided. The chip resonator gas cell comprises a ceramic substrate. The chip resonator gas cell comprises a cover glass. The chip resonator gas cell comprises a photonic resonator chip disposed between the ceramic substrate and the cover glass. The photonic resonator chip comprises a silicon substrate. The photonic resonator chip comprises a thermal silicon oxide layer disposed on the silicon substrate. The photonic resonator chip comprises a silicon nitride waveguide disposed on the thermal silicon oxide layer. The silicon nitride waveguide comprises a curved bus waveguide and a ring resonator adjacent to the curved bus waveguide. The curved bus waveguide and the ring resonator are arranged off-centric relative to each other. The photonic resonator chip comprises a polysilicon shield disposed above the silicon nitride waveguide.

According to other aspects of the present disclosure, the chip resonator gas cell may include one or more of the following features. The photonic resonator chip may further comprise a PECVD layer disposed between the silicon nitride waveguide and the polysilicon shield. The curved bus waveguide may define a first end corresponding to an input portion of the curved bus waveguide and a second end corresponding to an output portion of the curved bus waveguide. The first end and the second end may be arranged at a ninety degree orientation relative to each other. The first end may comprise an input optical coupler and the second end may comprise an output optical coupler. Each of the input optical coupler and the output optical coupler may comprise a grating optical coupler.

According to another aspect of the present disclosure, a photonic resonator chip spectroscopy gas sensing device is provided. The photonic resonator chip spectroscopy gas sensing device comprises a heat sink. The photonic resonator chip spectroscopy gas sensing device comprises a heating-cooling pad disposed on the heat sink. The photonic resonator chip spectroscopy gas sensing device comprises a chip resonator gas cell disposed on the heating-cooling pad. The chip resonator gas cell comprises a photonic resonator chip. The photonic resonator chip comprises a silicon nitride waveguide and a polysilicon shield disposed above the silicon nitride waveguide. The silicon nitride waveguide comprises a curved bus waveguide. The silicon nitride waveguide comprises a ring resonator adjacent to the curved bus waveguide. The curved bus waveguide and the ring resonator are arranged off-centric relative to each other.

According to other aspects of the present disclosure, the photonic resonator chip spectroscopy gas sensing device may include one or more of the following features. The photonic resonator chip spectroscopy gas sensing device may further comprise a light inlet configured for directing input light beam into the chip resonator gas cell. The photonic resonator chip spectroscopy gas sensing device may further comprise a light outlet configured for directing output light beam out of the chip resonator gas cell. The photonic resonator chip spectroscopy gas sensing device may further comprise a gas inlet configured for delivering a gas sample into the chip resonator gas cell. The photonic resonator chip spectroscopy gas sensing device may further comprise a gas outlet configured for removing the gas sample from the chip resonator gas cell. The photonic resonator chip may further comprise a silicon substrate. The photonic resonator chip may further comprise a thermal silicon oxide layer disposed on the silicon substrate. The photonic resonator chip may further comprise a PECVD layer disposed above the thermal silicon oxide layer. The silicon nitride waveguide may be disposed between the polysilicon shield and the PECVD layer. The curved bus waveguide may define a first end corresponding to an input portion of the curved bus waveguide and second end corresponding to an output portion of the curved bus waveguide. The first end and the second end may be arranged at a ninety degree orientation relative to each other. The first end may comprise an input optical coupler and the second end may comprise an output optical coupler. Each of the input optical coupler and the output optical coupler may comprise a grating optical coupler. The ring resonator may have an effective optical path length of approximately 150 mm.

### BRIEF DESCRIPTION OF FIGURES

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates a perspective view of an example photonic resonator chip spectroscopy gas sensing device in accordance with at least some example embodiments of the present disclosure.
FIG. 1B illustrates a side view of an example photonic resonator chip spectroscopy gas sensing device in accordance with at least some example embodiments of the present disclosure.
FIG. 1C illustrates another side view of an example photonic resonator chip spectroscopy gas sensing device in accordance with at least some example embodiments of the present disclosure.
FIG. 1D illustrates a top view of an example photonic resonator chip spectroscopy gas sensing device in accordance with at least some example embodiments of the present disclosure.
FIG. 1E illustrates an exploded view of an example photonic resonator chip spectroscopy gas sensing device in accordance with at least some example embodiments of the present disclosure.
FIG. 2A illustrates a perspective view of an example chip resonator gas cell in accordance with at least some example embodiments of the present disclosure.
FIG. 2B illustrates a top view of an example chip resonator gas cell in accordance with at least some example embodiments of the present disclosure.
FIG. 2C illustrates an exploded view of an example chip resonator gas cell in accordance with at least some example embodiments of the present disclosure.
FIG. 3A illustrates a top view of an example photonic resonator chip in accordance with at least some example embodiments of the present disclosure.
FIG. 3B illustrates a cross sectional view of the example photonic resonator chip in accordance with at least some example embodiments of the present disclosure.
FIG. 3C illustrates an exploded view of an example photonic resonator chip in accordance with at least some example embodiments of the present disclosure.
FIG. 3D illustrates an enlarged portion of the example resonator chip in accordance with at least some example embodiments of the present disclosure.
FIG. 4 illustrates a top view of an example waveguide in accordance with at least some example embodiments of the present disclosure.
FIG. 4B illustrates an enlarged view of a portion of the waveguide in accordance with at least some example embodiments of the present disclosure.
FIG. 4C illustrates an enlarged view of a portion of the waveguide in accordance with at least some example embodiments of the present disclosure.
FIG. 4D illustrates a grating coupler in accordance with at least some example embodiments of the present disclosure.
FIG. 5 is a block diagram of an example control device for gas spectroscopy in accordance with example embodiments of the present disclosure.

### DETAILED DESCRIPTION

Some embodiments of the present disclosure will now be described more fully hereinafter with reference to the accompanying figures, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically connected," "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. the term "element" may refer to an article, a device, or an apparatus that may provide one or more functionalities.

### Overview

Various embodiments address technical problems associated with thermal stability in gas cells. As understood by those of skill in the field which the present disclosure pertains, there are numerous scenarios in which thermal stability in gas cells is beneficial.

Spectroscopy analysis of a sample (e.g., a fluid sample) may be used to determine one or more components within the fluid sample by illuminating the fluid sample with specific wavelengths of light and monitoring the absorption of light over an optical path length. Each component of the sample (atomic or molecular) may have a unique absorption signature that may be used to identify the presence and/or concentration of the component within the sample, or in some examples, the absence of a target gas (e.g., a leaked toxic gas) in the sample. For example, the concentration of a methane, carbon dioxide, and/or other gases may be measured by illuminating the sample with varying wavelengths of light and analyzing the absorption signature across the various wavelengths.

Resonator gas cell spectroscopy sensing can effectively multiply the equivalent absorption path length in resonator gas cells and achieve high sensitivity. High finesse resonant cell for long equivalent path requires high accuracy mirrors and high stable supporting structure. The high mirror and structure requirement make the resonator gas cell difficult in the field and portable applications. Moreover, conventional resonator gas sensing techniques are associated with a high loss of the waveguide, which contributes, or otherwise, causes low resonant quality.

Various embodiments of the present disclosure address the above challenges and deficiencies. Example embodiments, provide photonic resonator chip spectroscopy gas sensing techniques, device, and systems that senses the gas over the optical path many times with locking resonant between optical resonant frequency and gas sensing sampling frequency. Various embodiments of the present disclosure provide photonic resonator chip spectroscopy gas sensing techniques, devices, and systems with a photonic resonator working/operating at a frequency that is different from the dual frequency comb sensing sampling frequency/repetition frequency.

In some embodiments, the photonic resonator chip comprises off-concentric bus waveguide and ring waveguide arrangement to achieve smooth coupling between the bus and the ring, so as to minimize the efficiency loss of the ring resonator. The low loss allows light beam cycles in the resonant ring up to thousand times, which enhances the gas sensitivity thousand times. With evanescence sensing factor of 0.6, in some embodiments, the equivalent sensing length may be hundred meters using ring with effective optical path of about 150mm, in some embodiments. In some embodiments the photonic resonator chip comprises a curved bus waveguide with input and output at about 90-degree orientation offset to prevent crosstalk between input and output (which may occur in strait input and output arrangement in typical waveguide sensing, where input light scattering can reach the output).

In some embodiments, the photonic resonator chip comprises on-chip grating couplers for direct fiber laser input and output to reduce the laser insertion loss without additional coupling components. In some embodiments, the photonic resonator chip comprises polysilicon light shield layer to eliminate stray light for high signal to noise ratio in gas sensing.

In some embodiments, the effective path length of the ring resonator is about 150mm, which matches ten times of the typical dual frequency comb spectroscopy sensing laser source repetition frequency of 200MHz, and which enables resonant gas sensing with enhanced gas cell sensitivity. In various embodiments, the chip resonator spectroscopy gas sensing device comprise a photonic ring resonator sensing the contact gas in evanescence field. Dual frequency comb spectroscopy sensing with frequency comb source and detection beams passing through the bus waveguide extracts the spectroscopy features of the sample gas flowing of the chip ring resonator. Highly compacted chip resonant enables miniature gas sensing productors.

In various embodiments, the chip resonator sensor comprises a silicon photonic chip ring resonator, chip scale package with fiber optic ports and gas inlet and outlet, thermal heater/cooler. In various embodiments, the chip resonator is constructed using a CMOS process on a silicon substrate. Above the thermal dioxide layer, silicon nitride waveguide ring resonator and bus with input/output coupler gratings are etched and annealed. Thin plasma-enhanced chemical vapor deposition (PECVD) dioxide cover layer followed by poly silicon light shield is then applied. The off-concentric coupling between bus and resonator ring minimizes the optic loss for the high finesse of the resonant. Annealed nitride waveguide further reduces the ring resonant loss for the highest possible finesse.

In various embodiments, the chip resonator is chip-scale packaged with ceramic substrate and glass cover. Fiber optic input/output ports and gas inlet/outlet connectors are bonded on the glass cover. Thermal heat/cooler is thermally cemented on the bottom of the package. Precision thermal controlled chip matches the ring resonant frequency to dual frequency comb spectroscopy laser source. The ring resonant has 150mm effective optical path length, which matches the dual frequency comb spectroscopy source. With resonator finesse of greater than 1,000 and evanescence sensing factor of about 0.6, the equivalent sensing length may be about 100m. Higher gas sensitivity may be achieved with optimizing the waveguide with lower optical loss and higher resonator finesse.

In various embodiments, the light input/output and gas inlet/outlet are diagonally cross arranged to minimize the gas sensor package dimensions while maintaining optimal light and gas delivery paths. The compact nature of the device can be integrated in chip scale package, CSP, with wafer level, WL, manufacturing process. In various embodiments, the photonic resonator chip leverages thermal-electric heating/cooling to compensate the operating ambient and precisely lock the resonant frequency to the gas sensing sampling frequency in dual comb spectroscopy sensing.

### Example Photonic Resonator Chip Spectroscopy Gas Sensing Device

Photonic resonator chip spectroscopy gas sensing represents an approach to gas analysis that leverages optical spectroscopy techniques for detecting and analyzing gas samples. The technology may utilize photonic ring resonators to sense gas molecules present in an evanescence field, where light propagating through a waveguide structure interacts with gas molecules in close proximity to the waveguide surface.

In some embodiments, spectroscopy analysis of a gas sample may be performed by monitoring the gas spectral absorption in the evanescence field with specific wavelength light traveling in the waveguide ring resonator over an optical path length. Each component of the gas sample may have a characteristic absorption signature that can be used to identify the presence, concentration, or absence of target gases within the sample. For example, the concentration of methane, carbon dioxide, or other gases may be measured by illuminating the sample with varying wavelengths of light and analyzing the absorption signature across the various wavelengths.

Resonator gas cell spectroscopy sensing may effectively multiply the equivalent absorption path length in resonator gas cells and achieve enhanced sensitivity compared to conventional approaches. The photonic resonator chip spectroscopy gas sensing approach may address challenges associated with conventional resonator gas sensing techniques, which may be associated with high loss of the waveguide and low resonant quality. Additionally, conventional high finesse resonant cells for long equivalent path may require high accuracy mirrors and stable supporting structures, which can make resonator gas cells difficult to implement in field and portable applications.

The photonic resonator chip spectroscopy gas sensing device may comprise a photonic ring resonator that senses contact gas in an evanescence field. In some embodiments, dual frequency comb spectroscopy sensing with frequency comb source and detection beams passing through a bus waveguide may extract spectroscopy features of sample gas flowing over the chip ring resonator. The compact nature of the chip resonant structure may enable miniature gas sensing products suitable for various applications including environmental monitoring, industrial process control, and healthcare applications.

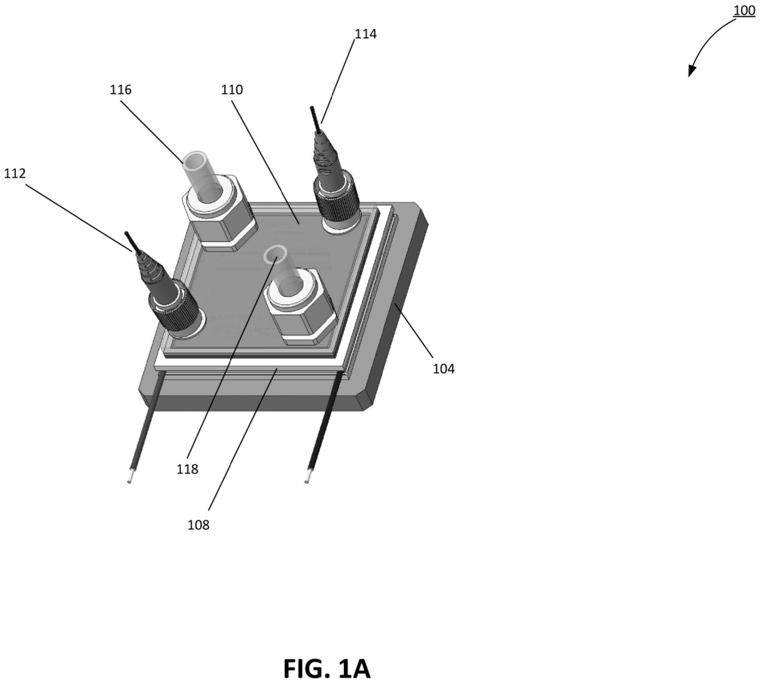

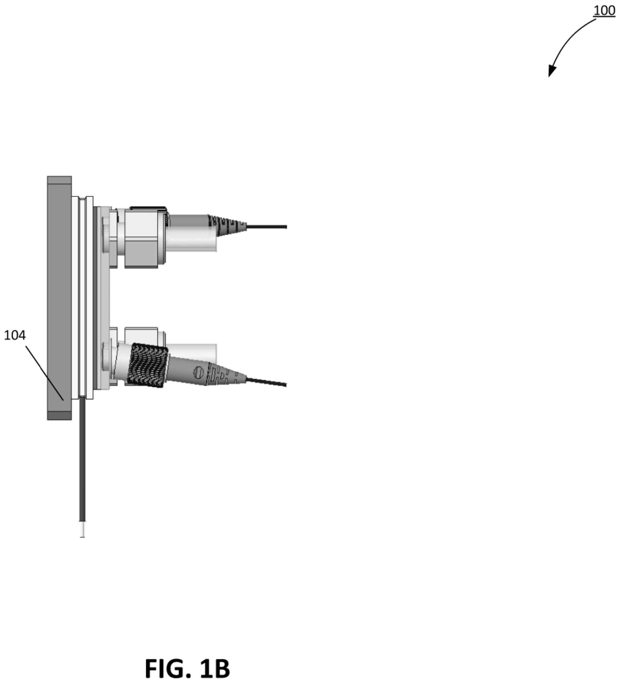

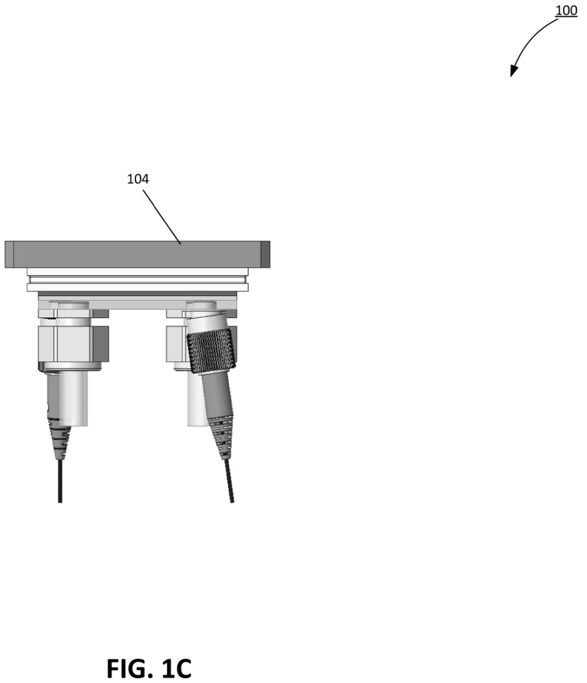

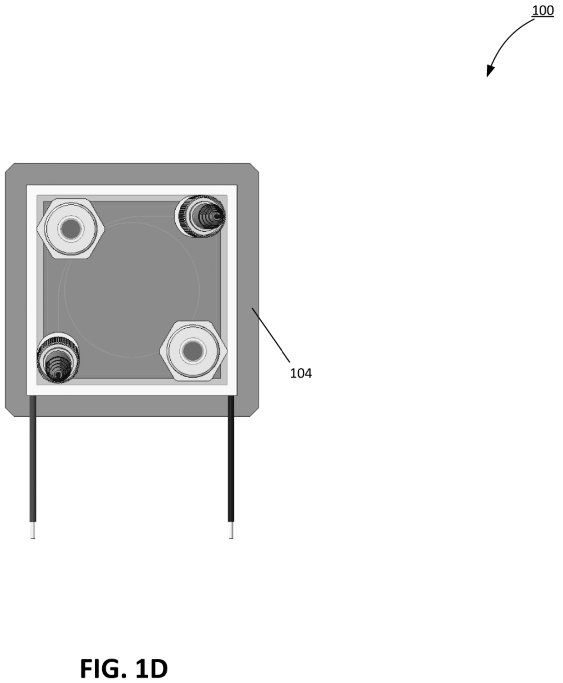

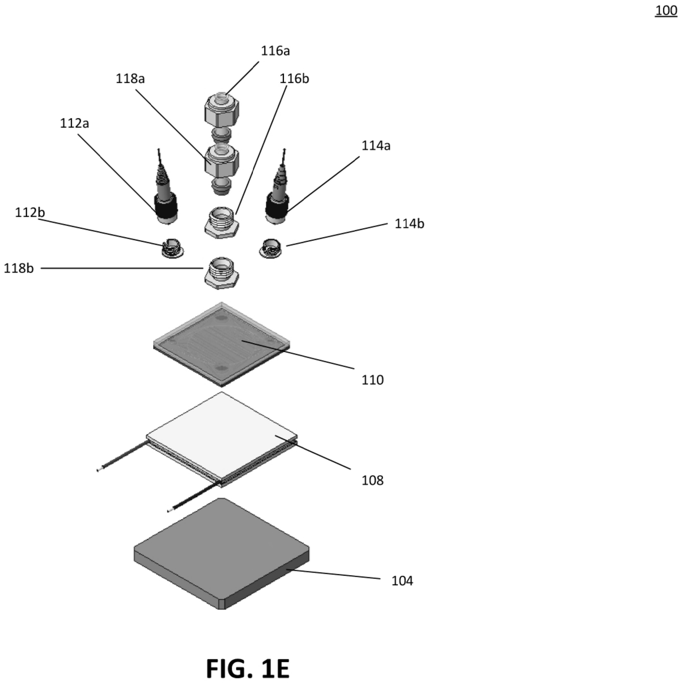

Referring to FIGS. 1A-1E, a photonic resonator chip spectroscopy gas sensing device 100 (gas sensing device 100) may comprise a heat sink 104, a heating-cooling pad 108, and a chip resonator gas cell 110. The heating-cooling pad 108 may be positioned between the heat sink 104 and the chip resonator gas cell 110. The gas sensing device 100 may further comprise a light inlet 112, a light outlet 114, a gas inlet 116, and a gas outlet 118. In some embodiments, the heat sink 104, the heating-cooling pad 108, and the chip resonator gas cell 110 may have a square shape or a rectangular shape. In some other embodiments, one or more of the heat sink 104, the heating-cooling pad 108, and the chip resonator gas cell 110 may have a different shape (e.g., irregular shape, circular, or other shapes).

The heat sink 104 may function as a thermal management component of the gas sensing device configured to dissipate heat away from the chip resonator gas cell 110 through conductive, convective, or radiative heat transfer mechanisms. The heat sink 104 may be constructed from thermally conductive materials such as aluminum, copper, or other metals, and may include features such as fins, channels, or other surface area enhancements to improve heat dissipation efficiency. The heat sink 104 may work in conjunction with the heating-cooling pad 108 to maintain thermal stability of the chip resonator gas cell 110, thereby enabling precise control of the resonant frequency of the ring resonator 330 for optimal gas sensing performance.

The light inlet 112 may function as an optical input interface of the gas sensing device 100 configured to receive and introduce input light beams, such as laser beams, into the chip resonator gas cell 110 and the silicon nitride waveguide 308 thereof. The light inlet 112 may be positioned to enable efficient optical coupling to the input optical coupler 322 of the curved bus waveguide 320 of the silicon nitride waveguide 308, allowing input light to propagate through the silicon nitride waveguide 308 for interaction with gas samples in the evanescent field of the ring resonator 330 of the silicon nitride waveguide 308 during spectroscopy measurements. In some embodiments, the light inlet 112 may be arranged in a specific geometric configuration relative to the light outlet 114 and/or other components of the gas sensing device 100 to optimize light transmission paths and/or device packaging dimensions.

The light inlet 112 may comprise an inlet optical fiber cable 112a. The inlet optical fiber cable 112a may comprise an optical fiber cable configured to transmit input light beams from an external light source into the gas sensing device 100 and to the silicon nitride waveguide 308 in the chip resonator gas cell 110 thereof. An optical fiber cable may comprise a transmission medium comprising one or more optical fibers configured to guide electromagnetic radiation such as light beams or laser light, through total internal reflection. The inlet optical fiber cable 112a may comprise a core with a higher refractive index surrounded by a cladding with a lower refractive index, and may include protective outer layers such as buffer coatings, strength members, and outer jackets to provide mechanical protection and environmental resistance during operation.

The light inlet 112 may comprise an inlet fiber port 112b. The inlet fiber port 112b may provide mechanical and optical coupling between the inlet optical fiber cable 112a and internal photonic components of a gas sensing device 100. The inlet fiber port 112b may comprise a precision-engineered connector or receptacle that maintains proper optical alignment and minimizes insertion loss during optical signal transmission. The inlet fiber port 112b may include alignment features, such as ferrules, sleeves, or V-grooves, that ensure accurate positioning of the optical fiber core relative to the optical axis of the coupled photonic component. The inlet fiber port 112b may be configured to allow for the light inlet 112 to be orientated at an angle to optimize light transmission paths.

The light outlet 114 may function as an optical output interface of the gas sensing device 100 configured to transmit and guide output light beams that have interacted with the gas sample being analyzed. The light outlet 114 may be positioned to enable efficient optical coupling from the output optical coupler of the curved bus waveguide of the silicon nitride waveguide, allowing output light bean carrying spectroscopic information to exit the gas sensing device 100 for subsequent analysis. An output light beam may comprise electromagnetic radiation that has propagated through the silicon nitride waveguide and has interacted with gas molecules in the evanescent field of the ring resonator, thereby carrying spectroscopic information corresponding to the absorption characteristics of the analyzed gas sample. The output light beams may contain wavelength-specific absorption signatures that enable identification and quantification of gas components within the sample, and may exit the gas device 100 through the light outlet 114 for analysis by detection and processing systems. In some embodiments, the light outlet 114 may be arranged in a specific geometric configuration relative to light inlet 112 and/or other components of the gas sensing device 100 to optimize light delivery paths and/or device packaging dimensions.

The light outlet 114 may comprise an outlet optical fiber cable 114a. The outlet optical fiber cable 114a may comprise an optical fiber cable configured to transmit output light beams from the silicon nitride waveguide 308 in the chip resonator gas cell 110 to external detection and analysis systems. As described above, an optical fiber cable may comprise a transmission medium comprising one or more optical fibers configured to guide electromagnetic radiation such as light beams or laser light through total internal reflection. The outlet optical fiber cable 114a may comprise a core with a higher refractive index surrounded by a cladding with a lower refractive index, and may include protective outer layers such as buffer coatings, strength members, and outer jackets to provide mechanical protection and environmental resistance during operation. The outlet optical fiber cable 114a may be configured to maintain optical signal integrity while transmitting spectroscopic information contained within the output light beams that have interacted with gas molecules in the evanescent field of the ring resonator 330, thereby preserving wavelength-specific absorption signatures for subsequent analysis by external detection systems.

The light outlet 114 may comprise an outlet fiber port 114b. The outlet fiber port 114b may provide mechanical and optical coupling between the outlet optical fiber cable 114a and internal photonic components of the gas sensing device 100. The outlet fiber port 114b may comprise a precision-engineered connector or receptacle that maintains proper optical alignment and minimizes insertion loss during optical signal transmission from the silicon nitride waveguide 308 to external detection and analysis systems. The outlet fiber port 114b may include alignment features, such as ferrules, sleeves, or V-grooves, that ensure accurate positioning of the optical fiber core relative to the optical axis of the coupled photonic component. The outlet fiber port 114b may be configured to preserve optical signal integrity while transmitting spectroscopic information contained within output light beams that have interacted with gas molecules in the evanescent field of the ring resonator 330, thereby maintaining wavelength-specific absorption signatures for subsequent analysis by external detection systems. The outlet fiber port 114b may be configured to allow for the light outlet 114 to be orientated at an angle to optimize light transmission paths and/or device packaging dimensions..

The gas inlet 116 may comprise a fluidic interface component of the gas sensing device 100 configured to introduce a gas sample to be analyzed into the gas sensing device. The gas inlet 116 may comprise one or more fluidic coupling elements, including gas fittings, gas connectors, and associated flow passages, that enable controlled introduction of gas samples from an external source into the gas sensing device 100 while maintaining proper sealing and flow characteristics. The gas inlet 116 may be positioned and configured to work in conjunction with a gas outlet 118 to establish a controlled gas flow path through the sensing device, thereby enabling continuous or batch analysis of gas samples during spectroscopy measurements. In some embodiments, the gas inlet 116 may be arranged in a specific geometric configuration relative to optical components of the gas sensing device 100 to optimize gas delivery paths and/or device packaging dimensions. In some embodiments, the gas inlet 116 may be arranged in a specific geometric configuration relative to optical components of the gas sensing device 100 to optimize gas delivery paths and/or device packaging dimensions.

The gas inlet 116 may comprise a gas inlet fitting 116a. The gas inlet may comprise a coupling component of the gas inlet 116 configured to establish a sealed connection between an external gas source and the internal gas flow pathways of the gas sensing device 100. The gas inlet fitting 116a may be constructed from materials compatible with the gas samples being analyzed and may be configured to establish fluid communication between an external gas source and an internal chamber of the chip resonator gas cell 110 through corresponding through-holes or passages in the chip resonator gas cell 110. The gas inlet fitting 116a may comprise a tube through which gas flows into the gas sensing device 100, threaded connections, compression fittings, quick-connect couplers, or other mechanical coupling mechanisms designed to maintain gas-tight seals while enabling controlled introduction of gas samples into the chip resonator gas cell 110. The gas inlet fitting 116a may be constructed from materials compatible with the gas samples being analyzed and may include features such as flow restrictors, filters, or pressure regulation elements to optimize gas delivery characteristics during spectroscopy measurements. The gas inlet fitting 116a may be constructed from chemically inert materials such as stainless steel, PTFE, or other materials resistant to corrosion or contamination from the gas samples. The gas inlet fitting 116a may incorporate sealing elements such as O-rings, gaskets, or threaded interfaces to maintain fluid containment during operation.

The gas inlet 116 may comprise a gas inlet connector 116b. The gas inlet connect 116b may comprise a coupling component that provides mechanical and sealed interface between external gas supply systems and the internal gas flow pathways of the gas sensing device 100. The gas inlet connector 116b may comprise threaded connections, compression fittings, quick-connect couplers, or other mechanical coupling mechanisms designed to maintain gas-tight seals. The gas inlet connector may incorporate sealing elements such as O-rings, gaskets, or threaded interfaces to maintain fluid containment and prevent gas leakage during operation, while enabling removable connection to external gas delivery systems for spectroscopic analysis applications.

The gas outlet 118 may comprise a fluidic interface component of the gas sensing device 100 configured to allow for gas samples to exit the gas sensing device 100. The gas outlet 118 may comprise one or more coupling elements, including gas fittings, gas connectors, and/or associated flow passages, that enable controlled removal of gas samples while maintaining proper sealing and flow characteristics. The gas outlet 118 may work in conjunction with the gas inlet to establish a controlled gas flow path through the gas sensing device 100, thereby enabling continuous or batch analysis of gas samples during spectroscopy measurements.

The gas outlet 118 may comprise a gas outlet fitting 118a. The gas outlet fitting 118a may comprise a coupling component of the gas outlet 118 configured to establish a sealed connection between the internal gas flow pathways of the gas sensing device and an external gas removal or collection system. The gas outlet fitting may be constructed from materials compatible with the gas samples being analyzed and may be configured to establish fluid communication between an internal chamber of the chip resonator gas cell and an external gas handling system through corresponding through-holes or passages in the chip resonator gas cell. The gas outlet fitting may comprise a tube through which gas flows out of the gas sensing device 100, and may include threaded connections, compression fittings, quick-connect couplers, or other mechanical coupling mechanisms designed to maintain gas-tight seals while enabling controlled removal of gas samples from the chip resonator gas cell 110 and gas sensing device 100. The gas outlet fitting 118a may be constructed from chemically inert materials such as stainless steel, PTFE, or other materials resistant to corrosion or contamination from the gas samples. The gas outlet fitting may incorporate sealing elements such as O-rings, gaskets, or threaded interfaces to maintain fluid containment and prevent gas leakage during operation while enabling removable connection to external gas collection or disposal systems.

The gas outlet 118 may comprise a gas outlet connector 118b. The gas outlet connector 118b may comprise a coupling component that provides mechanical and sealed interface between the internal gas flow pathways of the gas sensing device 100 and external gas removal or collection systems. The gas outlet connector 118b may comprise threaded connections, compression fittings, quick-connect couplers, or other mechanical coupling mechanisms designed to maintain gas-tight seals while enabling controlled removal of analyzed gas samples from the chip resonator gas cell 110.

In some embodiments, the light inlet 112 may be configured for receiving input light beams, such as laser beams from dual comb sources (also referred to herein interchangeably as dual frequency comb source). The dual comb source may comprise a double frequency comb spectroscopy light source that provides optical signals with precise frequency characteristics suitable for enhanced gas sensing applications. The dual comb source may be configured to generate dual frequency combs (e.g., two optical frequency combs) including a first optical frequency comb (first light beam) and second optical frequency comb (second light beam). The dual comb source may be configured to generate a first optical frequency comb having a first repetition frequency and a second optical frequency comb having a second repetition frequency that is different from the first repetition frequency. The dual comb source may utilize different technological approaches to achieve the generation of synchronized pair of optical frequency combs with controlled repetition frequency differences. In some embodiments, the dual comb source may comprise a pump laser and two comb generators that generate the pair of optical frequency combs with controlled repetition frequencies differences. In some embodiments, the pair of optical frequency combs may be characterized by a set of regularly spaced frequencies in its spectral content and short pulses in the time domain.

Output light beam may exit the gas sensing device 100 via the light outlet 114. The output light beam may correspond to the input light beam after interaction with the gas sample. The gas inlet 116 may be configured to introduce gas (e.g., gas sample) to be analyzed into the chip resonator gas cell 110. For example, the gas to be analyzed may pass through the gas inlet 116 to the chip resonator gas cell 110. The gas outlet 118 may be configured to allow for the sample gas to exit the chip resonator gas cell 110 and the gas sensing device 100 after interacting with the input light beam. In this regard, in some embodiments, the gas inlet 116 and the gas outlet 118 may be configured to allow gas to flow through the gas sensing device 100 for detection and analysis.

In some embodiments, the gas inlet 116 and the gas outlet 118 may be arranged diagonally relative to the light inlet 112 and the light outlet 114 of the gas sensing device 100. For example, as illustrated in FIG. 1A, the pair of light inlet 112 and the light outlet 114 and the pair of gas inlet 116 and the gas outlet 118 may be diagonally cross arranged. As shown, in FIG. 1A, the light inlet 112 and the light outlet 114 may be positioned at first diagonally opposite corners of the chip resonator gas cell 110, and the gas inlet 116 and the gas outlet 118 may be positioned at second diagonally opposite corners of the chip resonator gas cell 110 that is different from the first diagonally opposite corners. The diagonal cross arrangement may minimize the gas sensor package dimensions while maintaining optimal light and gas delivery paths.

The diagonal cross arrangement may provide several technical advantages for the gas sensing device 100. By positioning the optical and fluidic interfaces at different corner locations, the arrangement may prevent interference between optical and fluidic pathways within the chip resonator gas cell 110. This spatial separation may reduce the risk of optical signal degradation that could occur if gas flow patterns disrupted the optical alignment or introduced turbulence near the silicon nitride waveguide 308.

The diagonal positioning may also enable more efficient utilization of the available surface area of the chip resonator gas cell 110, allowing for a more compact overall device footprint while maintaining adequate spacing between different functional interfaces. The arrangement may facilitate easier routing of external connections, such as the inlet optical fiber cable 112a, outlet optical fiber cable 114a, gas inlet fitting 116a, and gas outlet fitting 118a, without creating mechanical interference between these components during assembly or operation.

Furthermore, the diagonal cross arrangement may optimize the gas flow characteristics within the chamber defined by the spacer 222. By positioning the gas inlet through-hole 216 and gas outlet through-hole 218 at opposite corners, the arrangement may promote more uniform gas distribution throughout the chamber, ensuring that gas molecules have adequate opportunity to interact with the evanescent field generated by the ring resonator 330. This improved gas distribution may enhance the sensitivity and accuracy of spectroscopic measurements by providing more consistent gas concentration profiles across the sensing region.

The compact nature of the diagonal cross arrangement may enable integration of the gas sensing device 100 in chip scale package (CSP) configurations with wafer level (WL) manufacturing processes. This integration capability may facilitate cost-effective mass production while maintaining the precision required for optical and fluidic interfaces. The arrangement may also simplify the mechanical design of the cover glass 226 by distributing the through-holes across different regions, potentially reducing stress concentrations that could occur if multiple through-holes were positioned in close proximity.

The heating-cooling pad 108 may be disposed between the heat sink 104 and the chip resonator gas cell 110. The heating-cooling pad 108 may be thermally cemented on the bottom of the package. The heating-cooling pad 108 may be configured to regulate the temperature of the chip resonator gas cell 110 to lock a resonant frequency of the ring resonator of the chip resonator gas cell 110 to a gas sensing sampling frequency in dual comb spectroscopy sensing. For example, the heating-cooling pad 108 may provide thermal-electric heating and cooling to compensate the operating ambient temperature and precisely lock the resonant frequency of the ring resonator to the gas sensing sampling frequency in dual comb spectroscopy sensing, such as for example, repetition frequency of an optical frequency comb emitted from the dual comb source during spectroscopy gas sensing.

The heating-cooling pad 108 may comprise thermoelectric elements, such as Peltier devices or the like, that can selectively generate heat or absorb heat depending on the direction of electrical current flow. The heating-cooling pad may be thermally coupled to the chip resonator gas cell 110 through direct contact, thermal interface materials, or thermal cement to ensure efficient heat transfer.

In some embodiments, the chip resonator gas cell 110 may be chip-scale packaged with a substrate, such as a ceramic substrate, and cover, such as a glass cover. The inlet fiber port 112b, outlet fiber port 114b, gas inlet connector 116b, and gas outlet connector 118b may be bonded or otherwise secured to the cover. The inlet fiber port 112b and the outlet fiber port 114b may provide optical coupling interfaces, while the gas inlet connector 116b and the gas outlet connector 118b may provide fluidic coupling interfaces for gas flow through the chip resonator gas cell 110.

### Example Chip Resonator Gas Cell

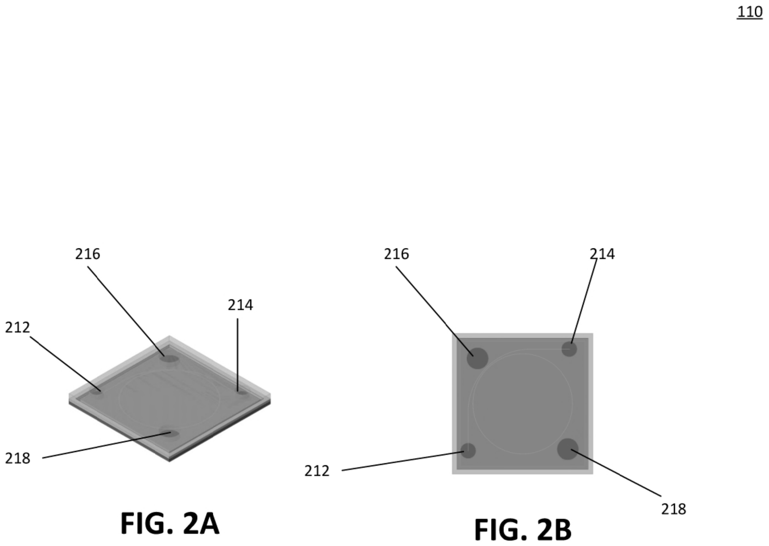

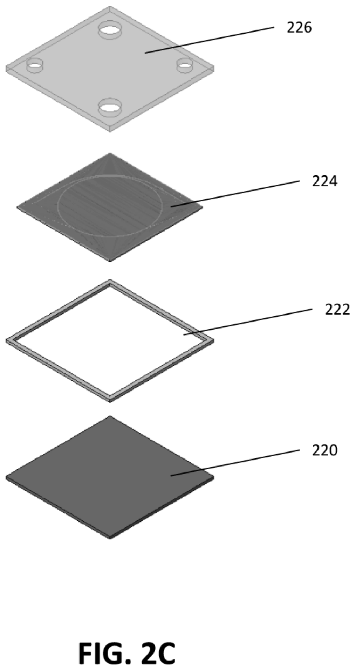

Referring to FIG. 2C, the chip resonator gas cell 110 may comprise a layered construction with multiple components arranged in a stacked configuration. The chip resonator gas cell 110 may comprise a substrate 220, which may form a base layer of the chip resonator gas cell 110. In some embodiments, the substrate 220 may be constructed of a ceramic material. The substrate 220 may be constructed from other materials in some other embodiments such as for example, polymeric materials or other materials. The substrate 220 may function as a foundational layer or base material that provides structural support for subsequent layers, components, or processes in the fabrication of the chip resonator gas cell 110. The substrate 220 may serve as a platform for the deposition, formation, or attachment of additional layers such as waveguide structures, and other photonic components. The substrate may provide mechanical stability, thermal conductivity, and electrical isolation properties necessary for the proper functioning of the chip resonator gas cell 110.

A spacer 222 may be disposed on the substrate 220. The spacer 222 may comprise a hollow frame structure. The spacer 222 may maintain a separation distance between the substrate 220 and the cover glass 226 above the spacer 222, thereby creating a defined chamber volume within the chip resonator gas cell 110 for gas sample containment and analysis. The spacer 222 may be constructed from materials compatible with the gas samples being analyzed and may provide structural support while maintaining precise dimensional tolerances necessary for optimal optical performance of the photonic resonator chip 224.

The hollow frame structure of the spacer 222 may define internal walls that form the boundaries of the gas chamber, allowing gas samples introduced through the gas inlet through-hole 216 to flow through the chamber and interact with the evanescent field generated by the silicon nitride waveguide 308 of the photonic resonator chip 224. The spacer 222 may have a predetermined thickness that establishes the vertical dimension of the gas chamber, which may be optimized to provide sufficient gas volume for spectroscopic analysis while maintaining compact device dimensions suitable for chip-scale packaging.

In some embodiments, the spacer 222 may be constructed from ceramic materials, polymeric materials, or other materials that provide chemical resistance to the gas samples being analyzed and thermal stability during temperature regulation operations performed by the heating-cooling pad 108. The spacer 222 may be bonded or otherwise secured to the substrate 220 using adhesives, thermal bonding, or other attachment methods that maintain gas-tight sealing around the perimeter of the chamber to prevent gas leakage during operation.

The spacer 222 may include alignment features or registration elements that ensure proper positioning of the cover glass 226 relative to the substrate 220 and the photonic resonator chip 224. These alignment features may maintain optical alignment between the silicon nitride waveguide 308 and the light inlet through-hole 212 and light outlet through-hole 214, while also ensuring proper fluidic communication between the gas chamber and the gas inlet through-hole 216 and gas outlet through-hole 218.

A photonic resonator chip 224 may be disposed on the substrate 220 within the spacer 222. The photonic resonator chip 224 may be manufactured using a standard CMOS process on a silicon substrate. As further described below, the photonic resonator chip 224 may comprise a silicon substrate 304, a thermal silicon oxide layer 306 disposed on and/or above the silicon substrate 304, and a silicon nitride waveguide 308 disposed on and/or above the thermal silicon oxide layer that form optical sensing components of the gas sensing device 100.

A cover glass 226 may be disposed on the spacer 222. The cover glass 226 may seal the chamber formed between substrate 220 and the photonic resonator chip 224. The cover glass 226 may provide optical access to the photonic resonator chip 224 while containing gas samples within the chamber during spectroscopy measurements. The cover glass 226 may define a light inlet through-hole 212, a light outlet through-hole 214, a gas inlet through-hole 216, and a gas outlet through-hole 218. The light inlet through-hole 212 and the light outlet through-hole 214 may be positioned to allow optical coupling to internal photonic components of the cover glass 226. The gas inlet through-hole 216 and the gas outlet through-hole 218 may be positioned to enable gas flow through the chip resonator gas cell 110 for spectroscopy analysis.

The light inlet through-hole 212, light outlet through-hole 214, gas inlet through-hole 216, and the gas outlet through-hole 218 may be arranged in a diagonal cross configuration, with the light inlet through-hole 212 and the light outlet through-hole 214 positioned at a first diagonally opposite corners of the cover glass 226, and the gas inlet through-hole 216 and gas outlet through-hole 218 positioned at a second diagonally opposite corners different for the first opposite corners. This arrangement may minimize overall package dimensions while maintaining optimal light and gas delivery paths through the chip resonator gas cell 110.

### Example Photonic Resonator Chip

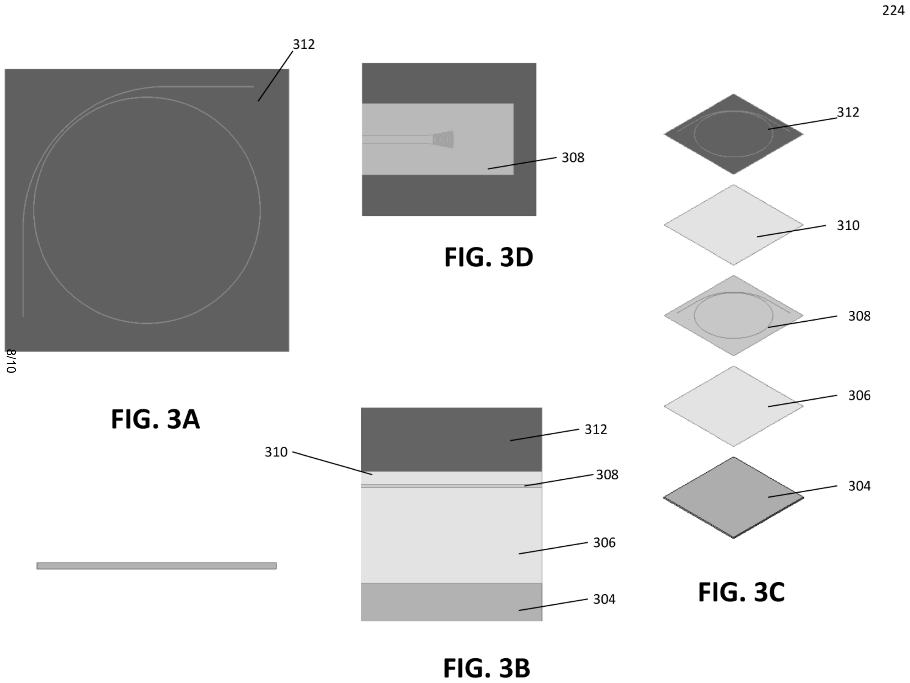

Referring to FIG. 3B, the photonic resonator chip 224 may comprise a multi-layer structure arranged in a stacked configuration. The photonic resonator chip 224 may comprise a silicon substrate 304, which may provide foundational support for the photonic resonator chip 224. The silicon substrate 304 may serve as a platform for subsequent layer deposition during manufacturing processes.

The silicon substrate 304 may be fabricated using semiconductor manufacturing techniques and may have a substantially planar surface with precise dimensional tolerances suitable for photonic device applications. The silicon substrate 304 may provide mechanical stability and structural integrity to support the overlying layers during manufacturing processes and operational use. In some embodiments, the silicon substrate 304 may have a thickness ranging from approximately 100 micrometers to 700 micrometers, though other thicknesses may be suitable depending on the specific application requirements and manufacturing constraints.

The silicon substrate 304 may be processed using standard CMOS-compatible processes, enabling integration with existing semiconductor manufacturing infrastructure and facilitating cost-effective production. The substrate surface may be prepared through cleaning, polishing, and surface treatment processes to ensure optimal adhesion and interface quality for subsequent layer deposition. The silicon substrate 304 may also provide thermal conductivity properties that facilitate heat dissipation from the photonic resonator chip 224 during operation, working in conjunction with the heat sink 104 and heating-cooling pad 108 to maintain thermal stability of the device.

In some embodiments, the silicon substrate 304 may include doping regions or other semiconductor features that provide electrical isolation or other functional characteristics necessary for the operation of the photonic resonator chip 224. The crystalline structure of the silicon substrate 304 may be oriented to optimize the performance of overlying photonic structures and to minimize optical losses within the silicon nitride waveguide 308 that will be formed in subsequent layers.

A thermal silicon oxide layer 306 may be disposed on and/or above the silicon substrate 304, which may serve as an insulating layer between the silicon substrate 304 and optical components above the thermal silicon oxide layer 306. The thermal silicon oxide layer 306 may provide electrical isolation and may facilitate optical waveguide performance by creating appropriate refractive index contrast for light confinement.

The thermal silicon oxide layer 306 may be formed through thermal oxidation processes where the silicon substrate 304 is exposed to oxygen at elevated temperatures, causing the formation of a silicon dioxide (SiO₂) layer on the silicon surface. The thermal silicon oxide layer 306 may function as a lower cladding layer for the silicon nitride waveguide 308, providing optical isolation between the waveguide and the silicon substrate 304. The electrical isolation properties of the thermal silicon oxide layer 306 may prevent electrical interference between the silicon substrate 304 and the optical components, particularly when the silicon substrate 304 includes doped regions or other electrically active elements. The thermal silicon oxide layer 306 may have suitable dielectric properties with high breakdown voltage and low leakage current, making it suitable for applications requiring electrical isolation in photonic integrated circuits.

The thermal silicon oxide layer 306 may also provide mechanical stress relief between the silicon substrate 304 and the silicon nitride waveguide 308, accommodating differences in thermal expansion coefficients between the different materials during temperature variations. This stress relief function may help maintain the structural integrity of the photonic resonator chip 224 during thermal cycling operations performed by the heating-cooling pad 108. The thermal silicon oxide layer 306 may be processed using standard CMOS-compatible techniques, enabling integration with existing semiconductor manufacturing processes and facilitating cost-effective production of the photonic resonator chip 224.

A silicon nitride waveguide 308 may be disposed on and/or above the thermal silicon oxide layer 306, forming an optical waveguide structure for light propagation within the photonic resonator chip 224. The silicon nitride waveguide 308 may be etched and annealed to reduce ring resonant loss for enhanced performance. The annealing process may reduce optical losses within the silicon nitride waveguide 308, thereby improving the quality factor of resonant structures formed within the waveguide 308. In some embodiments, the silicon nitride waveguide 308 may comprise a curved bus waveguide and a ring resonator arranged off-concentric with respect to each other.

As further shown in FIG. 3B, a protective layer 310 may be disposed on and/or above the silicon nitride waveguide 308, providing a protective covering over the silicon nitride waveguide 308. In some embodiments, the protective layer is a plasma-enhanced chemical vapor deposition (PECVD) layer. The protective layer 310 may comprise silicon oxide (SiO2) material deposited using plasma-enhanced chemical vapor deposition processes. The protective layer 310 may protect the silicon nitride waveguide 308 from environmental factors and may provide mechanical stability to the waveguide structure.

A polysilicon shield 312 may be disposed on and/or above the protective layer 310. The polysilicon shield 312 may be configured to eliminate stray light to provide high signal to noise ratio for gas sensing applications. The polysilicon shield 312 may block unwanted optical signals that could interfere with spectroscopy measurements, thereby improving measurement accuracy and sensitivity of the gas sensing device 100.

The polysilicon shield 312 may comprise a layer of polycrystalline silicon material deposited using standard semiconductor manufacturing processes such as chemical vapor deposition (CVD) or low-pressure chemical vapor deposition (LPCVD). The polysilicon material may be selected for its optical absorption properties, which enable effective blocking of stray light across a broad range of wavelengths relevant to gas spectroscopy applications.

The polysilicon shield 312 may be particularly effective at blocking scattered light that could arise from surface roughness, material interfaces, or fabrication imperfections within the photonic resonator chip 224. By eliminating these sources of optical noise, the polysilicon shield 312 may enable detection of weaker absorption signals from gas molecules, thereby improving the minimum detectable concentration limits of the gas sensing device 100. The improved signal-to-noise ratio provided by the polysilicon shield 312 may be especially beneficial when analyzing trace gas concentrations or when operating in environments with high ambient light levels.

The polysilicon shield 312 may be integrated into the standard CMOS manufacturing process used to fabricate the photonic resonator chip 224, enabling cost-effective production without requiring additional specialized equipment or processing steps. The compatibility with CMOS processes may also facilitate integration of the gas sensing device 100 with electronic control circuits, signal processing components, and other semiconductor devices on the same chip or package.

The layered structure of the photonic resonator chip 224 may be manufactured using standard CMOS processes on the silicon substrate 304. Above the thermal silicon oxide layer 306, the silicon nitride waveguide 308 with ring resonator and bus structures may be etched and annealed. The thin protective layer 310 may be applied using plasma-enhanced chemical vapor deposition, followed by deposition of the polysilicon shield 312. This manufacturing approach may enable integration of optical waveguide functionality with protective and shielding elements in a compact form factor suitable for chip-scale packaging.

### Silicon Nitride Waveguide Configuration

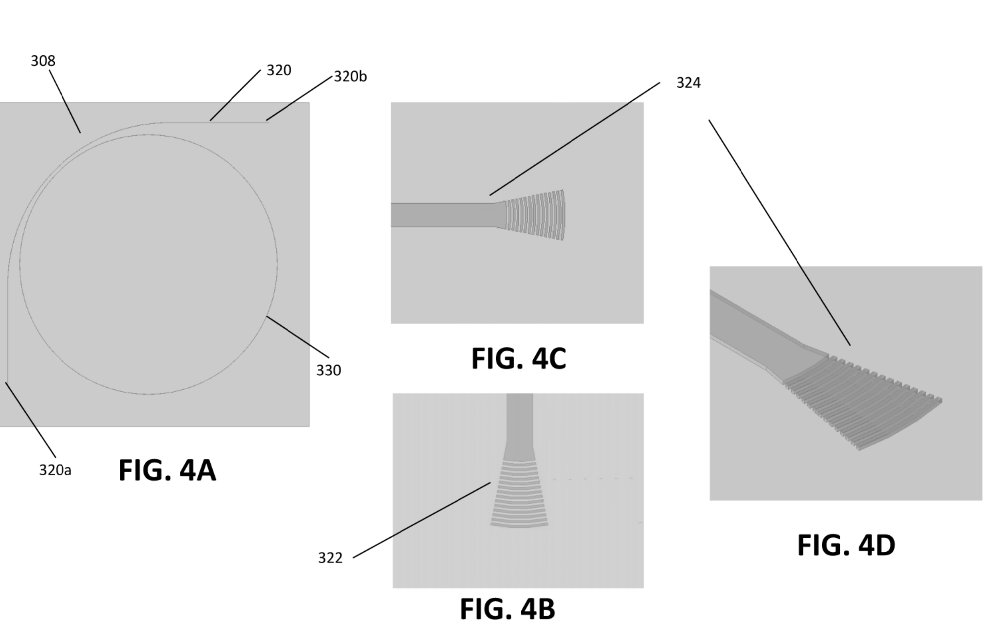

Referring to FIG. 4A, the silicon nitride waveguide 308 may comprise a curved bus waveguide 320 and a ring resonator 330. The ring resonator 330 may be positioned adjacent to a portion of the curved bus waveguide 320 to enable optical coupling between the curved bus waveguide 320 and the ring resonator 330 for gas sensing applications.

The curved bus waveguide 320 may comprise an optical waveguide structure having a non-linear geometric configuration that guides electromagnetic radiation (e.g., light) along a curved optical path within the silicon nitride waveguide 308. The curved bus waveguide 320 may be fabricated from silicon nitride material and may be configured to transport optical signals (e.g., light) between input and output locations while maintaining single-mode propagation characteristics. The curved configuration may be specifically configured to provide spatial separation between input and output optical couplers, thereby minimizing optical crosstalk and unwanted signal interference. The curved bus waveguide 320 may have a bend radius optimized to reduce bending losses while enabling efficient optical coupling with the ring resonator 330 through evanescent field overlap in a controlled coupling region.

The curved bus waveguide 320 may have a first end 320a and a second end 320b. The first end 320a may correspond to an input portion of the curved bus waveguide 320 and the second end 320b may correspond to an output portion of the curved bus waveguide 320. The first end 320a and the second end 320b may be arranged at a ninety degree orientation relative to each other. For example, the first end 320a and the second end 320b may be arranged at a ninety degree angle relative to each other.

The first end 320a may comprise an input optical coupler 322 and the second end 320b may comprise an output optical coupler 324. The input optical coupler 322 may comprise an optical interface component configured to efficiently transfer electromagnetic radiation (e.g., light) from an external optical source into the waveguide structure (e.g., curved bus waveguide 320 and ring resonator 330). The input optical coupler 322 may comprise a precisely engineered coupling mechanism that converts free-space optical signals or guided optical signals from external sources into guided modes within the silicon nitride waveguide. The input optical coupler may be designed to minimize insertion loss and maintain optical signal integrity during the coupling process, and may include features such as mode matching elements, anti-reflection coatings, or geometric tapering to optimize coupling efficiency between different optical media.

The output optical coupler 324 may comprise an optical interface component configured to efficiently extract electromagnetic radiation (e.g., light) from the waveguide structure and direct it toward external optical systems or detection systems. The output optical coupler 324 may comprise a precisely engineered coupling mechanism that converts guided optical modes within the silicon nitride waveguide into free-space optical signals or guided optical signals suitable for transmission through external optical components, such as optical fibers. The output optical coupler 324 may be designed to minimize insertion loss and preserve spectroscopic information contained within the optical signals, and may include features such as mode matching elements, anti-reflection coatings, or geometric tapering to optimize coupling efficiency during the extraction process.

As shown in FIGS. 4B and 4C, the input optical coupler 322 and the output optical coupler 324 may comprise grating optical couplers. The grating optical couplers may be on-chip grating optical couplers configured for direct fiber laser input and output to reduce laser insertion loss without additional coupling components. The grating optical couplers may provide efficient optical coupling interfaces for the silicon nitride waveguide 308. The grating optical couplers may comprise a periodic optical structure comprising a series of regularly spaced features, such as ridges, grooves, or refractive index variations, that enables efficient coupling of optical signals between different propagation modes or media through diffraction mechanisms. The grating optical coupler may be fabricated directly on the photonic resonator chip using semiconductor manufacturing processes and may be configured to couple light between the silicon nitride waveguide and external optical components, such as optical fibers, at specific angles determined by the grating period and wavelength of operation. The grating optical coupler may provide advantages including reduced alignment sensitivity, direct fiber-to-chip coupling capability, and elimination of additional coupling components, thereby reducing overall system complexity and insertion losses in photonic integrated circuits.

The ring resonator 330 may comprise a closed-loop optical waveguide structure fabricated from silicon nitride material that supports circulating optical modes through total internal reflection. The ring resonator 330 may be configured as a circular or substantially circular waveguide structure that enables light to propagate in a continuous loop, creating optical resonances at specific wavelengths determined by the optical path length and refractive index of the waveguide material. The ring resonator 330 may be positioned adjacent to the curved bus waveguide 320 to enable optical coupling through evanescent field interaction, allowing light to transfer between the curved bus waveguide 320 and the ring resonator 330. The ring resonator 330 may be configured to achieve high quality factor (finesse) values greater than 1,000, enabling multiple circulation cycles of optical signals for enhanced gas sensing sensitivity through extended interaction time with gas molecules present in the evanescent field surrounding the waveguide structure.

As shown in FIG. 4A, the curved bus waveguide 320 and the ring resonator 330 may be arranged off-concentric with respect to each other. The off-concentric arrangement may provide smooth coupling between the curved bus waveguide 320 and the ring resonator 330 to minimize efficiency loss of the ring resonator 330. The low efficiency loss of the ring resonator 330 may allow light beam cycles in the ring resonator 330 up to thousand times, which may enhance gas sensitivity accordingly.

The off-concentric arrangement may be characterized by the ring resonator 330 being positioned such that its center axis is laterally displaced from the center axis of the curved bus waveguide 320. This lateral displacement may create a coupling region where the evanescent fields of the curved bus waveguide 320 and the ring resonator 330 overlap in a controlled manner. The degree of lateral displacement may be precisely engineered to achieve optimal coupling efficiency while maintaining the desired quality factor of the ring resonator 330.

With the evanescence sensing factor of about 0.6, the equivalent sensing length may be about 100 meters using the ring resonator 330 with the effective optical path of about 150mm. The light beam may cycle in the ring resonator 330 up to thousand times, which may enhance the gas sensitivity thousand times compared to conventional approaches.

The smooth coupling provided by the off-concentric arrangement may minimize abrupt changes in the electromagnetic field distribution as light transitions between the curved bus waveguide 320 and the ring resonator 330. This gradual field transition may reduce scattering losses and mode mismatch losses that could otherwise degrade the quality factor of the ring resonator 330. The reduced coupling losses may enable the ring resonator 330 to achieve higher finesse values, thereby increasing the number of round trips that light can make within the ring structure before being attenuated below detectable levels.

The enhanced number of light circulation cycles within the ring resonator 330 may directly correlate to improved gas sensing sensitivity through increased interaction time between the circulating light and gas molecules present in the evanescent field. Each circulation of light within the ring resonator 330 may provide an additional opportunity for absorption by gas molecules, effectively multiplying the absorption path length by the number of circulation cycles. With up to thousand circulation cycles, the effective absorption path length may be increased by a factor of approximately one thousand compared to a single-pass configuration.

The curved configuration of the curved bus waveguide 320 with the first end 320a and the second end 320b at ninety degree orientation offset may prevent crosstalk between the input optical coupler 322 and the output optical coupler 324. In some embodiments, crosstalk may occur in configurations where input and output are arranged in a straight orientation, where input light scattering can reach the output.

The ninety degree orientation offset may be achieved by designing the curved bus waveguide 320 with a bend radius that maintains low optical losses while providing sufficient spatial separation between the input optical coupler 322 and the output optical coupler 324. The bend radius may be optimized to minimize bending losses while ensuring that the curved bus waveguide 320 maintains single-mode operation throughout the curved section.

The prevention of crosstalk may be particularly important in spectroscopy applications where weak absorption signals must be detected with high precision. Crosstalk between the input optical coupler 322 and the output optical coupler 324 could introduce unwanted optical signals that interfere with the spectroscopic measurements, potentially masking weak absorption features or introducing false absorption signatures. The ninety degree orientation offset may provide sufficient optical isolation to ensure that scattered light from the input optical coupler 322 does not directly reach the output optical coupler 324.

The ring resonator 330 may have an effective optical path length of approximately 150 mm. The effective path length of the ring resonator 330 may match ten times the typical dual frequency comb spectroscopy sensing laser source repetition frequency of 200MHz, which may enable resonant gas sensing with enhanced gas cell sensitivity. The ring resonator 330 may operate with a finesse of greater than 1,000, which may represent the quality factor of the ring resonator 330 that quantifies the sharpness of the resonant peaks and the efficiency of light confinement within the resonator structure. In some examples, finesse may be defined as the ratio of the free spectral range to the full width at half maximum (FWHM) of a resonant peak, and higher finesse values indicate better light confinement and lower optical losses within the ring resonator 330.

The finesse value of greater than 1,000 achieved by the ring resonator 330 may be enabled by the off-concentric arrangement between the curved bus waveguide 320 and the ring resonator 330, which minimizes coupling losses and scattering losses that could otherwise degrade the quality factor. The annealed silicon nitride waveguide 308 may further contribute to the high finesse by reducing material-related optical losses such as surface roughness scattering and absorption losses within the waveguide material.

The high finesse of the ring resonator 330 may directly correlate to the number of circulation cycles that light can complete within the ring structure before being attenuated below detectable levels. With a finesse greater than 1,000, light may circulate within the ring resonator 330 for hundreds to thousands of round trips, effectively multiplying the optical path length and enhancing the interaction time between the circulating light and gas molecules present in the evanescent field. This extended interaction time may significantly improve the sensitivity of gas detection by increasing the cumulative absorption signal from target gas molecules.

### Control System Architecture

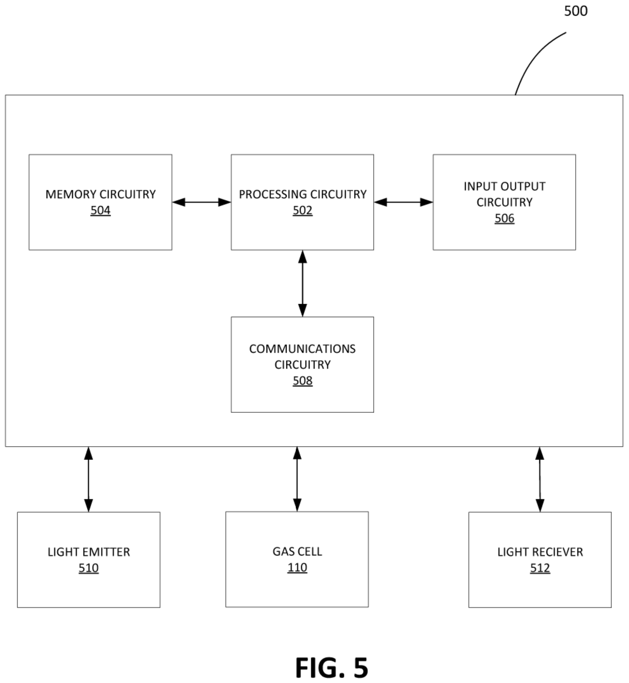

Referring now to FIG. 5, a block diagram of an example control device 500 in accordance with at least some embodiments of the present disclosure is provided. The control device 500 may be configured for controlling operation of one or more of the gas cell 110, a light emitter 510 that emits light into a gas cell 110, and/or a light receiver 512 that receives light that exits the gas cell 110. The control device 500 may control or perform one or more operations of a photonic resonator chip spectroscopy gas sensing, as described herein.

The example control device of FIG. 5 comprises a processor or processing circuitry 502, memory circuitry 504, input/output circuitry 506, and communications circuitry 508. In some embodiments, one or more portions of the example device 500 are configured to execute and perform the operations described herein.

Although components are described with respect to functional limitations, it should be understood that at least some of the particular implementations necessarily include the use of particular computing hardware. It should also be understood that in some embodiments certain of the components described herein include similar or common hardware. For example, in some embodiments two sets of circuitries both leverage use of the same processor(s), memory(ies), circuitry(ies), and/or the like to perform their associated functions such that duplicate hardware is not required for each set of circuitries.

Processing circuitry 502 may be embodied in a number of different ways. In various embodiments, the use of the terms "processor" or "processing circuitry" should be understood to include a single core processor, a multi-core processor, multiple processors internal to the example device 500, and/or one or more remote or "cloud" processor(s) external to the example device 500. In some example embodiments, processing circuitry 502 may include one or more processing devices configured to perform independently. Alternatively, or additionally, processing circuitry 502 may include one or more processor(s) configured in tandem via a bus to enable independent execution of operations, instructions, pipelining, and/or multithreading.

In an example embodiment, the processing circuitry 502 may be configured to execute instructions stored in the memory circuitry 504 or otherwise accessible to the processor. Alternatively, or additionally, the processing circuitry 502 may be configured to execute hard-coded functionality. As such, whether configured by hardware or software methods, or by a combination thereof, processing circuitry 502 may represent an entity (e.g., physically embodied in circuitry) capable of performing operations according to embodiments of the present disclosure while configured accordingly. Alternatively, or additionally, processing circuitry 502 may be embodied as an executor of software instructions, and the instructions may specifically configure the processing circuitry 502 to perform the various algorithms embodied in one or more operations described herein when such instructions are executed. In some embodiments, the processing circuitry 502 includes hardware, software, firmware, and/or a combination thereof that performs one or more operations described herein.

In some embodiments, the processing circuitry 502 (and/or co-processor or any other processing circuitry assisting or otherwise associated with the processor) is/are in communication with the memory circuitry 504 via a bus for passing information among components of the example device 500.

Memory or memory circuitry 504 may be non-transitory and may include, for example, one or more volatile and/or non-volatile memories. In some embodiments, the memory circuitry 504 includes or embodies an electronic storage device (e.g., a computer readable storage medium). In some embodiments, the memory circuitry 504 is configured to store information, data, content, applications, instructions, or the like, for enabling the example device 500 to carry out various operations and/or functions in accordance with example embodiments of the present disclosure.

Input/output circuitry 506 may be included in the example device 500. In some embodiments, input/output circuitry 506 may provide output to the user and/or receive input from a user. The input/output circuitry 506 may be in communication with the processing circuitry 502 to provide such functionality. The input/output circuitry 506 may comprise one or more user interface(s). In some embodiments, a user interface may include a display that comprises the interface(s) rendered as a web user interface, an application user interface, a user device, a backend system, or the like. In some embodiments, the input/output circuitry 506 also includes a keyboard, a mouse, a joystick, a touch screen, touch areas, soft keys a microphone, a speaker, or other input/output mechanisms. The processing circuitry 502 and/or input/output circuitry 506 may be configured to control one or more operations and/or functions of one or more user interface elements through computer program instructions (e.g., software and/or firmware) stored on a memory accessible to the processor (e.g., memory circuitry 504, and/or the like). In some embodiments, the input/output circuitry 506 includes or utilizes a user-facing application to provide input/output functionality to a computing device and/or other display associated with a user. In some embodiments, the input/output circuitry 506 one or more indicator lights or the like for providing a user notification (e.g., an alert or warning).

Communications circuitry 508 may be included in the example device 500. The communications circuitry 508 may include any means such as a device or circuitry embodied in either hardware or a combination of hardware and software that is configured to receive and/or transmit data from/to a network and/or any other device, circuitry, or module in communication with the example device 500. In some embodiments the communications circuitry 508 includes, for example, a network interface for enabling communications with a wired or wireless communications network. Additionally, or alternatively, the communications circuitry 508 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 508 may include circuitry for interacting with an antenna(s) and/or other hardware or software to cause transmission of signals via the antenna(s) and/or to handle receipt of signals received via the antenna(s). In some embodiments, the communications circuitry 508 enables transmission to and/or receipt of data from a user device, one or more sensors and/or other external computing device(s) in communication with the example device 500.

In some embodiments, two or more of the sets of circuitries 502-508 are combinable. Alternatively, or additionally, one or more of the sets of circuitries 502-508 perform some or all of the operations and/or functionality described herein as being associated with another circuitry. In some embodiments, two or more of the sets of circuitries 502-508 are combined into a single module embodied in hardware, software, firmware, and/or a combination thereof.

While the description above provides an example device 500, it is noted that the scope of the present disclosure is not limited to the description above. In some examples, an example device 500 in accordance with the present disclosure may be in other forms. In some examples, an example device 500 may comprise one or more additional and/or alternative elements, and/or may be structured differently than that illustrated in FIG. 5.

### Example Operation

During operation of the photonic resonator chip spectroscopy gas sensing device, input light may be introduced through the light inlet and directed into the silicon nitride waveguide structure. The input light may propagate through the curved bus waveguide, where the curved configuration may prevent crosstalk between input and output optical paths. The ninety degree orientation offset between the first end and second end of the curved bus waveguide may minimize interference from scattered input light reaching the output.

As the input light travels through the curved bus waveguide, optical coupling may occur between the curved bus waveguide and the ring resonator through the off-concentric arrangement. The off-concentric positioning may provide smooth coupling that minimizes efficiency loss, allowing light to enter the ring resonator with reduced optical losses. Once coupled into the ring resonator, the light may circulate within the ring structure multiple times, with the light beam potentially cycling up to thousand times within the ring resonator.

Simultaneously, gas to be analyzed may be introduced through the gas inlet and may flow into the chamber defined by the spacer within the chip resonator gas cell. The gas sample may flow through the chamber and may interact with the evanescent field generated by light circulating within the ring resonator. The evanescent field may extend beyond the physical boundaries of the silicon nitride waveguide, allowing the circulating light to interact with gas molecules present in the chamber.

The interaction between the circulating light and the gas molecules may result in wavelength-specific absorption characteristics that correspond to the molecular composition of the gas sample. Each gas component may exhibit characteristic absorption signatures at specific wavelengths, allowing for identification and quantification of different gas species within the sample. The multiple circulation of light within the ring resonator may effectively multiply the optical path length, enhancing the sensitivity of the absorption measurements.

The heating-cooling pad may regulate the temperature of the chip resonator gas cell to maintain precise control over the resonant frequency of the ring resonator. Temperature variations may cause changes in the refractive index of the silicon nitride waveguide material and thermal expansion of the waveguide, which may shift the resonant frequency of the ring resonator. By controlling the temperature through the heating-cooling pad, the resonant frequency may be locked to match the gas sensing sampling frequency of the dual frequency comb spectroscopy system.

The temperature regulation may enable the ring resonator to operate at optimal resonance conditions, where the effective optical path length of approximately 150 mm may match ten times the typical dual frequency comb spectroscopy sensing laser source repetition frequency. This frequency matching may enable enhanced gas cell sensitivity through resonant enhancement of the optical interaction with the gas sample.

After interacting with the gas sample within the chamber, the light may exit the ring resonator and may propagate through the curved bus waveguide toward the output optical coupler. The output light may carry spectroscopic information corresponding to the absorption characteristics of the gas sample. The output light may then exit the device through the light outlet and may be directed to the light receiver for analysis.

The light receiver may analyze the spectroscopic characteristics of the output light to determine the presence, concentration, or absence of target gases within the sample. The control device may process the signals from the light receiver to extract absorption signatures across various wavelengths, enabling identification of specific gas components such as methane, carbon dioxide, or other target gases. The processed gas may be removed from the chamber through the gas outlet, allowing for continuous flow-through operation of the gas sensing device.

The polysilicon shield may eliminate stray light during operation, providing high signal to noise ratio for the spectroscopic measurements. The shield may block unwanted optical signals that could interfere with the analysis, thereby improving the accuracy and sensitivity of the gas detection process. The combination of the enhanced optical path length through multiple circulation within the ring resonator, precise temperature control for frequency locking, and stray light elimination may enable highly sensitive gas detection with equivalent sensing lengths of approximately 100 meters using the compact chip-scale device.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A photonic resonator chip, comprising:
a substrate;
a thermal silicon oxide layer disposed on the substrate;
a silicon nitride waveguide disposed on the thermal silicon oxide layer, the silicon nitride waveguide comprising a curved bus waveguide and a ring resonator adjacent to the curved bus waveguide, wherein the curved bus waveguide and the ring resonator are arranged off-centric relative to each other; and
a polysilicon shield disposed above the silicon nitride waveguide.

2. The photonic resonator chip of claim 1, further comprising:
a PECVD layer disposed between the silicon nitride waveguide and the polysilicon shield.

3. The photonic resonator chip of claim 1, wherein the curved bus waveguide defines a first end corresponding to an input portion of the curved bus waveguide and second end corresponding to an output portion of the curved bus waveguide, wherein the first end and the second end are arranged at a ninety degree orientation relative to each other.

4. The photonic resonator chip of claim 3, wherein the first end comprises an input optical coupler and the second end comprises an output optical coupler.

5. The photonic resonator chip of claim 4, wherein each of the input optical coupler and the output optical coupler comprise a grating optical coupler.

6. The photonic resonator chip of claim 1, wherein the substrate is a silicon substrate.

7. The photonic resonator chip of claim 1, wherein the ring resonator has an effective optical path length of approximately 150 mm.

8. A chip resonator gas cell, comprising:
a ceramic substrate:
a cover glass; and
a photonic resonator chip disposed between the ceramic substrate and the cover glass, the photonic resonator chip comprising:
a silicon substrate;
a thermal silicon oxide layer disposed on the silicon substrate;
a silicon nitride waveguide disposed on the thermal silicon oxide layer, the silicon nitride waveguide comprising a curved bus waveguide and a ring resonator adjacent to the curved bus waveguide, wherein the curved bus waveguide and the ring resonator are arranged off-centric relative to each other; and
a polysilicon shield disposed above the silicon nitride waveguide.

9. The chip resonator gas cell of claim 8, wherein the photonic resonator chip further comprises:
a PECVD layer disposed between the silicon nitride waveguide and the polysilicon shield.

10. The chip resonator gas cell of claim 8, wherein the curved bus waveguide defines a first end corresponding to an input portion of the curved bus waveguide and a second end corresponding to an output portion of the curved bus waveguide, wherein the first end and the second end are arranged at a ninety degree orientation relative to each other.

11. The chip resonator gas cell of claim 10, wherein the first end comprises an input optical coupler and the second end comprises an output optical coupler.

12. The chip resonator gas cell of claim 11, wherein each of the input optical coupler and the output optical coupler comprise a grating optical coupler.

13. A photonic resonator chip spectroscopy gas sensing device, comprising:
a heat sink;
a heating-cooling pad disposed on the heat sink; and
a chip resonator gas cell disposed on the heating-cooling pad, the chip resonator gas cell comprising a photonic resonator chip, wherein the photonic resonator chip comprises a silicon nitride waveguide and a polysilicon shield disposed above the silicon nitride waveguide, the silicon nitride waveguide comprising:
a curved bus waveguide; and
a ring resonator adjacent to the curved bus waveguide, wherein the curved bus waveguide and the ring resonator are arranged off-centric relative to each other.

14. The photonic resonator chip spectroscopy gas sensing device of claim 13, further comprising:
a light inlet configured for directing input light beam into the chip resonator gas cell; and
a light outlet configured for directing output light beam out of the chip resonator gas cell.

15. The photonic resonator chip spectroscopy gas sensing device of claim 13, further comprising:
a gas inlet configured for delivering a gas sample into the chip resonator gas cell; and
a gas outlet configured for removing the gas sample from the chip resonator gas cell.
